# EUROPEAN PATENT APPLICATION

(11) **EP 4 428 568 A1**
(43) Date of publication of application: **11.09.2024**
(21) Application number: 22904545.5
(22) Date of filing: 25.11.2022
(51) Int. Cl.: G01S 7/4861, G01S 7/4913, G01P 15/02

(54) **ELECTRONIC DEVICE AND OPERATION METHOD THEREOF**

(30) Priority: 08.12.2021 KR 20210174715
(71) Applicant: Samsung Electronics Co., Ltd., Suwon-si, Gyeonggi-do 16677 (KR)
(72) Inventor: JEON, Jina, Suwon-si, Gyeonggi-do 16677 (KR); KIM, Chulkwi, Suwon-si, Gyeonggi-do 16677 (KR); YOON, Jongmin, Suwon-si, Gyeonggi-do 16677 (KR)
(74) Representative: Nederlandsch Octrooibureau
(86) International application number: PCT/KR2022/018877
(87) International publication number: WO 2023/106712

(57) **Abstract**

An electronic device according to various embodiments of the present disclosure may comprise: a LIDAR apparatus comprising a plurality of transmission diodes and a plurality of reception diodes; a processor for controlling the operation of the LIDAR apparatus; and a memory operatively connected to the processor. The processor may store instructions which, when executed, allow the processor to: control such that at least some of the plurality of transmission diodes and at least some of the plurality of reception diodes are switched on so as to scan an entire area in a first frame, wherein a first area, in which a depth value of an object is sensed, and a second area, in which a depth value of the object is not sensed, may be detected; and control such that first transmission diodes corresponding to the first area from among the plurality of transmission diodes are switched on and second transmission diodes corresponding to the second area from among the plurality of transmission diodes are switched off in a second frame. Other various embodiments are possible.

## Description

### [Technical Field]

Various embodiments of the disclosure relate to an electronic device and an operation method thereof.

### [Background Art]

Electronic devices may measure a distance to an object by using a light detection and ranging (Lidar) device. A transmission module of the Lidar device may include a plurality of transmission diodes disposed thereon and a reception module may include a plurality of reception diodes disposed thereon. In order to reduce the power consumption of the Lidar device, it should be possible to turn on and off operations of the plurality of transmission diodes and the plurality of reception diodes depending on the depth of the object.

### [Disclosure of Invention]

### [Technical Problem]

In case that a Lidar device turns on all transmission diodes and reception diodes regardless a depth of ab object, the power consumption of the Lidar device may increase. In case that transmission diodes and reception diodes are grouped into multiple channels and operated, turning on the transmission diodes and the reception diodes are turned on even in an area in which the depth of the object is not detected may cause increase in the power consumption of the Lidar device. Various embodiments of the disclosure may provide an electronic device capable of reducing power consumption of a Lidar device and an operation method thereof.

The technical subjects pursued in the disclosure may not be limited to the above-mentioned technical subjects, and other technical subjects which are not mentioned may be clearly understood, through the following descriptions, by those skilled in the art to which the disclosure pertains.

An electronic device according to various embodiments of the present disclosure may include a Lidar device including a plurality of transmission diodes and a plurality of reception diodes, a processor configured to control an operation of the Lidar device, and a memory operatively connected to the processor. The memory may store instructions that, when executed, cause the processor to control the plurality of transmission diodes and the plurality of reception diodes to be turned on so as to scan an entire area in a first frame, and detect a first area in which a depth value of an object is sensed and a second area in which a depth value of an object is not sensed, and in a second frame, among the plurality of transmission diodes, control first transmission diodes corresponding to the first area to be turned on and second transmission diodes corresponding to the second area to be turned off.

An operation method of an electronic device according to various embodiments of the disclosure may sense a depth value of an object with a radar device including a plurality of transmission diodes and a plurality of reception diodes and control the plurality of transmission diodes and the plurality of reception diodes to be turned on or off according to the sensed depth value of the object. In a first frame, all of the plurality of transmission diodes and the plurality of reception diodes may be controlled to be turned on and a first area in which the depth value of the object is sensed and a second area in which the depth value of the object is not sensed may be detected. In a second frame, among the plurality of transmission diodes, first transmission diodes corresponding to the first area may be controlled to be turned on and second transmission diodes corresponding to the second area may be controlled to be turned off.

An electronic device according to an embodiment of the disclosure may drive transmission diodes and reception diodes corresponding to an area in which a depth of an object is sensed to be selectively turned on and transmission diodes and reception diodes corresponding to an area in which a depth of an object is not sensed to be selectively turned off, so as to reduce power consumption of a Lidar device.

Various other effects understood directly or indirectly through the disclosure may be provided.

### [Brief Description of Drawings]

The aspects of specific embodiments and the features and advantages of other aspects will be apparent from the following detailed description taken in conjunction with the accompanying drawings.
FIG. 1 is a block diagram illustrating an electronic device in a network environment according to various embodiments of the disclosure.
FIG. 2 is a block diagram illustrating a display module according to various embodiments.
FIG. 3A is a diagram illustrating a first state (e.g., an unfolded state or open state) of an electronic device according to various embodiments of the disclosure.
FIG. 3B is a diagram illustrating a second state (e.g., a folded state or closed state) of an electronic device according to various embodiments of the disclosure.
FIG. 4A is a front perspective diagram of an electronic device according to various embodiments of the disclosure.
FIG. 4B is a rear perspective diagram of an electronic device according to various embodiments of the disclosure.
FIG. 5 is a diagram illustrating a Lidar device according to various embodiments of the disclosure.
FIG. 6 is a diagram illustrating an operation method of a transmission array unit of a transmission module.
FIG. 7 is a diagram illustrating an operation method of a Lidar device for each frame according to various embodiments of the disclosure.
FIG. 8 is a diagram illustrating an operation method of a Lidar device according to a screen configuration recognition frame.
FIG. 9 is a diagram illustrating an operation method of a transmission array unit, based on a depth change recognition frame.
FIG. 10 is a diagram illustrating an operation method of a transmission array unit for each frame.
FIG. 11 is a diagram illustrating an operation method of an electronic device according to various embodiments of the disclosure.

Throughout the drawings, the same or like reference numerals are used to designate the same or like elements.

### [Mode for the Invention]

The following description with reference to the accompanying drawings is provided to assist in comprehensive understanding of various embodiments of the disclosure as defined by the claims and equivalents thereof. The description includes various specific details to assist in the understanding, but the details are to be regarded merely as examples. Accordingly, those skill in the art will recognize that various changes and modifications may be made to various embodiments set forth herein without departing from the scope and spirit of the disclosure. In addition, descriptions of well-known functions and configurations may be omitted for the sake of clarity and conciseness.

The terms and words used in the following description and the claims are not limited to the bibliographical meanings thereof, but are merely used by the inventors to enable clear and consistent understanding of the disclosure. Accordingly, it will be apparent to those skilled in the art that the following description of various embodiments of the disclosure is provided merely for the purpose of illustration and is not intended to limit the disclosure as defined by the appended claims and equivalents thereof.

It is to be understood that the expressions in singular forms include plural referents unless the context clearly dictates otherwise. Therefore, for example, reference to "a component surface" includes reference to one or more such surfaces.

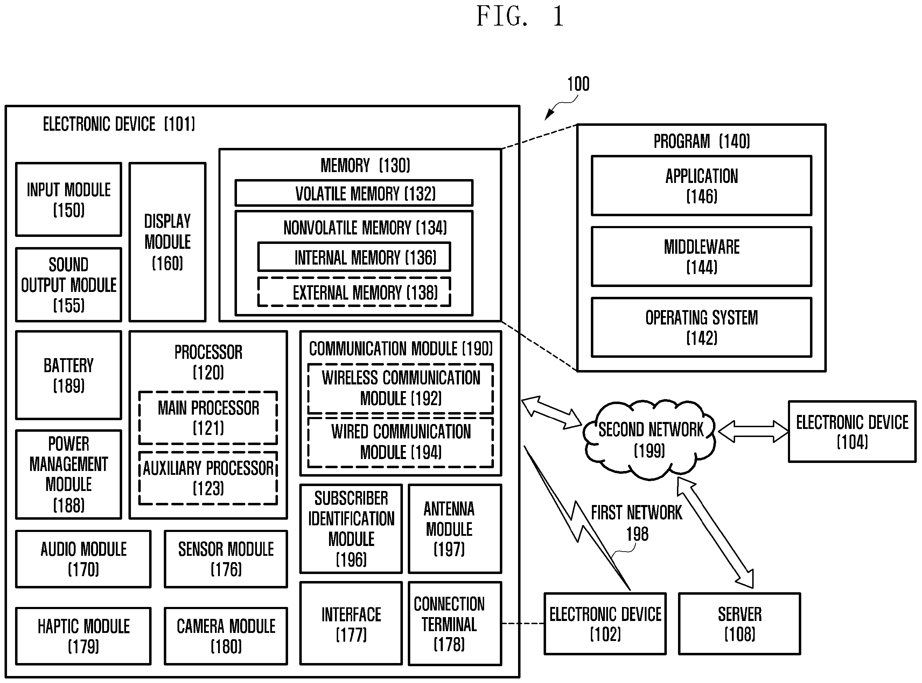

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

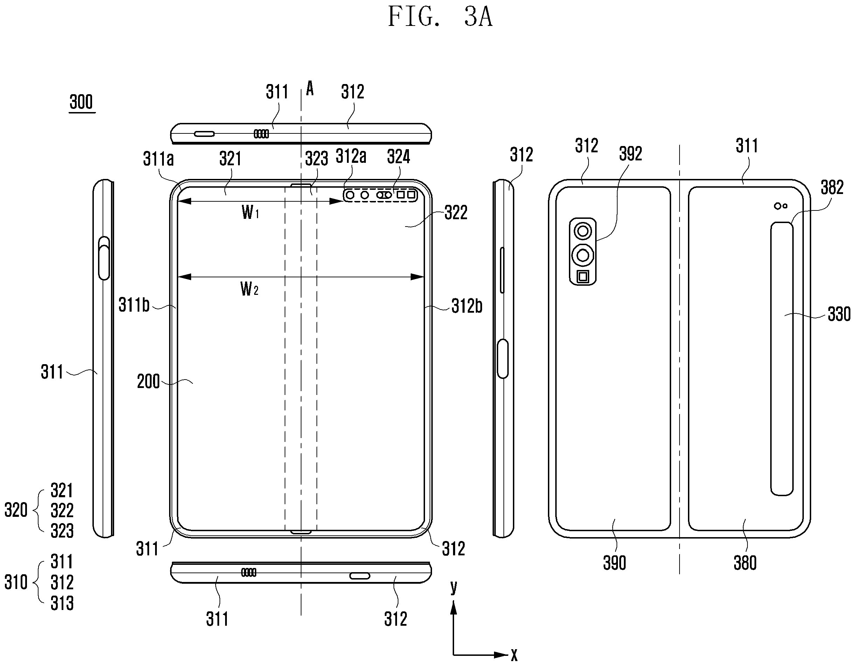

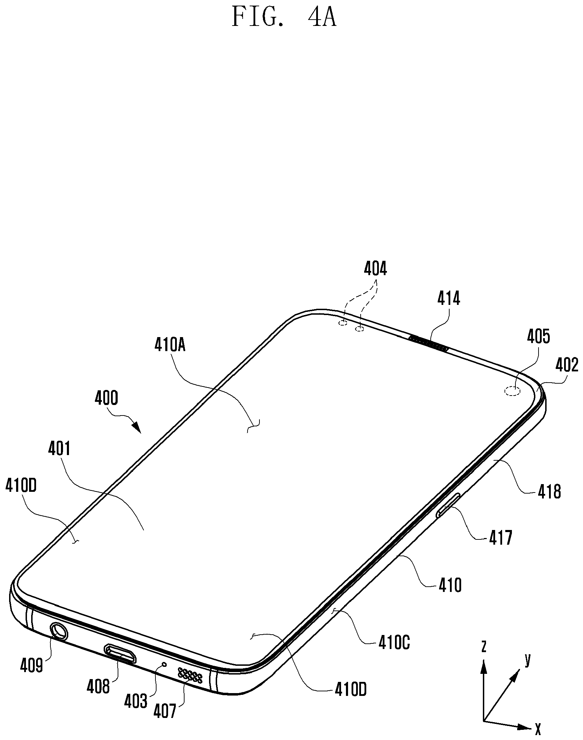

According to an embodiment, the display module 160 shown in FIG. 1 may include a variable display (e.g., a flexible display) (e.g., a stretchable display) (e.g., an expandable display) configured to extend an area (e.g., a screen size) thereof in a first direction (e.g., the y-axis direction in FIG. 3A or the y-axis direction in FIG. 4A).

According to an embodiment, the display module 160 shown in FIG. 1 may include a variable display (e.g., a flexible display) (e.g., a stretchable display) (e.g., an expandable display) configured to extend an area (e.g., a screen size) thereof in a second direction (e.g., the x-axis direction in FIG. 3a or the x-axis direction in FIG. 4A) orthogonal to the first direction (e.g., the y-axis direction).

According to an embodiment, the display module 160 shown in FIG. 1 may include a variable display (e.g., a flexible display) (e.g., a stretchable display) (e.g., an expandable display) configured to extend an area (e.g., a screen size) thereof in the first direction (e.g., the y-axis direction) and the second direction (e.g., the x-axis direction).

According to an embodiment, the display module 160 shown in FIG. 1 may include a flexible display configured to be folded or unfolded.

According to an embodiment, the display module 160 shown in FIG. 1 may include a flexible display providing a slidably arranged screen (e.g., a display screen).

According to an embodiment, the display module 160 may be also referred to as a variable display (e.g., a stretchable display), an expandable display, or a slide-out display.

According to an embodiment, the display module 160 shown in FIG. 1 may include a bar-type or plate-type display.

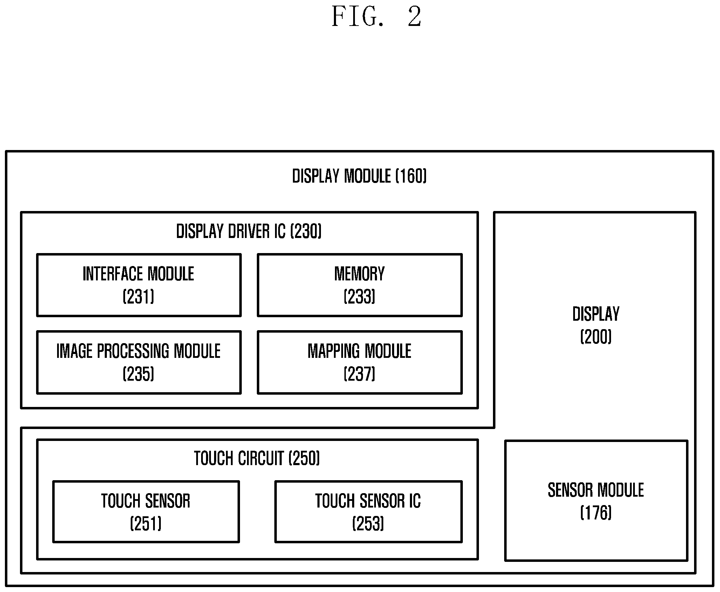

FIG. 2 is a block diagram illustrating a display module 160 according to various embodiments.

Referring to FIG. 2, the display module 160 may include a display 200 and a display driver IC 230 (hereinafter, referred to as "DDI 230") for controlling the display 200.

The DDI 230 may include an interface module 231, a memory 233 (e.g., a buffer memory), an image processing module 235, and/or a mapping module 237.

According to an embodiment, the DDI 230 may receive image data or image information including an image control signal corresponding to a command for controlling the image data from another component of the electronic device (e.g., the electronic device 101 in FIG. 1) through the interface module 231.

According to an embodiment, the image information may be received from a processor (e.g., the processor 120 in FIG. 1) (e.g., the main processor 121 in FIG. 1) (e.g., an application processor) or an auxiliary processor (e.g., the auxiliary processor 123 in FIG. 1) (e.g., a graphic processing device) operating independently from a function of the main processor 121.

According to an embodiment, the DDI 230 may perform communication with a touch circuit 250 or a sensor module 176 through the interface module 231. In addition, the DDI 230 may store at least a portion of the received image information in the memory 233. By way of example, the DDI 230 may store at least a portion of the received image information in the memory 233 in a unit of frames.

According to an embodiment, the image processing module 235 may perform a preprocessing or postprocessing (e.g., resolution, brightness, or size adjustment) on at least a portion of the image data based on an attribute of the image data or an attribute of the display 200.

According to an embodiment, the mapping module 237 may generate a voltage value or current value corresponding to the image data having been preprocessed or post-processed by the image processing module 235. As an embodiment, the generation of the voltage value or current value may be performed at least partially based on attributes (e.g., an arrangement (RGB stripe or pentile structure) of pixels or a size of each pixel) of pixels of the display 200.

In an embodiment, at least partial pixels of the display 200 may be driven based on the voltage value and current value and thus visual information (e.g., a text, an image, and/or an icon) corresponding to the image data may be displayed through the display 200.

According to an embodiment, the display module 160 may further include a touch circuit 250. The touch circuit 250 may include a touch sensor 251 and a touch sensor IC 253 for controlling the touch sensor.

As an embodiment, the touch sensor 253 may control the touch sensor 251 to detect a touch input or a hovering input for a predetermined position of the display 200. For example, the touch sensor IC 253 may measure a change in a signal (e.g., a voltage, a light amount, resistance, or a voltage amount) for a predetermined position of the display 200 to detect a touch input or a hovering input. The touch sensor IC 253 may provide information on the detected touch input or hovering input (e.g., a position, an area, a pressure, or a time) to the processor (e.g., the processor 120 in FIG. 1).

According to an embodiment, at least a portion (e.g., the touch sensor IC 253) of the touch circuit 250 may be included as a portion of the display driver IC 230 or the display 200.

According to an embodiment, at least a portion (e.g., the touch sensor IC 253) of the touch circuit 250 may be included as a portion of other components (e.g., the auxiliary processor 123) disposed outside the display module 160.

According to an embodiment, the display module 160 may include at least one sensor (e.g., an expansion detection sensor, a fingerprint sensor, a pressure sensor, or an illuminance sensor) of the sensor module 176 or a control circuit therefor. In this case, the at least one sensor or the control circuit therefor may be embedded as a portion (e.g., the display 200 or the DDI 230) of the display module 160 or a portion of the touch circuit 250. For example, when the embedded sensor module 176 of the display module 160 includes a biosensor (e.g., a fingerprint sensor), the biosensor may obtain bio-information (e.g., a fingerprint image) related to a touch input through a partial area of the display 200. For another example, when the embedded sensor module 176 of the display module 160 includes a pressure sensor, the pressure sensor may obtain pressure information related to a touch input through a partial area or the whole area of the display 200. For another example, when the embedded sensor module 176 of the display module 160 includes an expansion detection sensor, the expansion detection sensor may sense a change in area (e.g., a size of a screen) of the display (e.g., a variable display). According to an embodiment, the touch sensor 251 or the sensor module 176 may be disposed between pixels of a pixel layer of the display 200 or disposed on or under the pixel layer.

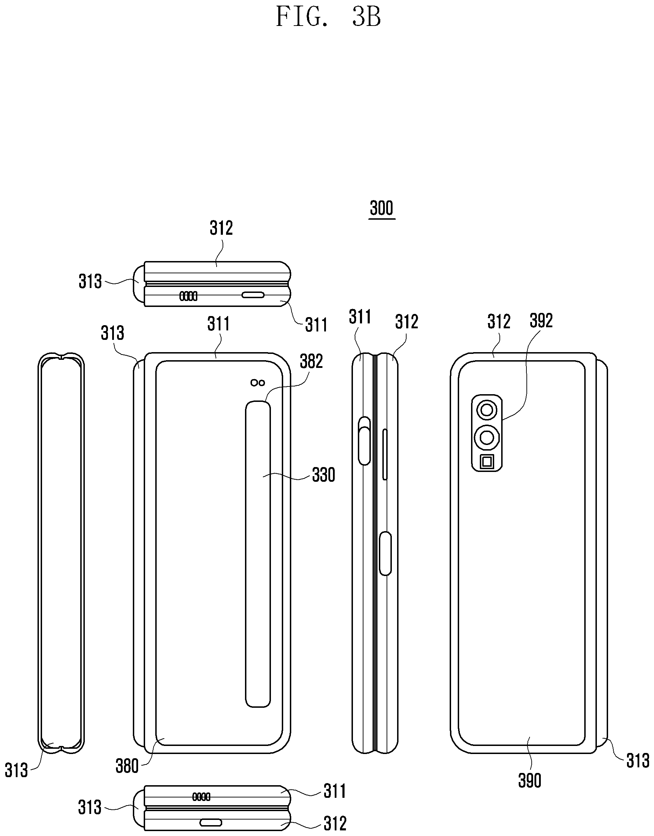

FIG. 3A is a diagram illustrating a first state (e.g., an unfolded state or open state) of an electronic device according to various embodiments of the disclosure. FIG. 3B is a diagram illustrating a second state (e.g., a folded state or closed state) of an electronic device according to various embodiments of the disclosure.

Referring to FIG. 3A and FIG. 3b, an electronic device 300 (e.g., the electronic device 101 in FIG. 1) may include a housing 310 and a display 320 disposed in a space formed by the housing 310. As an embodiment, the display 320 may include a flexible display or a foldable display.

The surface in which the display 320 is disposed may be defined as a first surface or a front surface (e.g., a surface on which a screen is displayed when unfolded) of the electronic device 300. And the opposite surface thereof may be defined as a second surface or a rear surface of the electronic device 300. In addition, a surface surrounding a space between the front surface and the rear surface may be defined as a third surface or a lateral surface of the electronic device 300. For example, the electronic device 300 may include a folding area 323 which is folded or unfolded in a first direction (e.g., the x-axis direction) around a folding axis (e.g., an A-axis).

In an embodiment, the housing 310 may include a first housing structure 311, a second housing structure 312 including a sensor area 324, a first rear cover 380, a hinge cover 313, and a second rear cover 390. The housing 310 of the electronic device 101 is not limited to the shape and combination shown in FIG. 3A and FIG. 3B and may be implemented by another shape or a combination and/or coupling of components. For example, in another embodiment, the first housing structure 311 and the first rear cover 380 may be integrally formed and the second housing structure 312 and the second rear cover 390 may be integrally formed.

In an embodiment, the first housing structure 311 and the second housing structure 312 are arranged opposite sides around a folding axis A and have generally symmetric shapes with respect to the folding axis A. An angle and distance between the first housing structure 311 and the second housing structure 312 may vary according to whether the electric device 300 is in an unfolded state (e.g., a first state), a folded state (e.g., a second state), or an intermediate state (e.g., a third state).

As an embodiment, the second housing structure 312, unlike the first housing structure 311, may additionally include the sensor area 324 in which various sensors (e.g., an illuminance sensor, an iris sensor, and/or an image sensor) are disposed, but may have a symmetrical shape to the first housing structure in other areas.

As an embodiment, in addition to the sensor area 324, at least one sensor (e.g., a camera module, an illuminance sensor, an iris sensor, and/or an image sensor) may be disposed on under the display and/or on a bezel area.

As an embodiment, the first housing structure 311 and the second housing structure 312 may together define a recess for receiving the display 320. In the embodiment shown in the drawing, the recess may have two or more different widths in a direction (e.g., x-axis direction) perpendicular to the folding axis A due to the sensor area 324.

For example, the recess may have a first width W 1 between a first portion 311a of the first housing structure 311 and a first portion 312a of the second housing structure 312 formed at edge of the sensor area 324 in the second housing structure 312. The recess may have a second width W2 defined by a second portion 311b of the first housing structure 311, which is parallel to the folding axis A in the first housing structure 311, and a second portion 312b of the second housing structure 312, which does correspond to the sensor area 324 and is parallel to the folding axis A in the second housing structure 312. In this case, the second width W2 may be configured to be longer than the first width W1. In other words, the first portion 311a of the first housing structure 311 and the first portion 312a of the second housing structure 312 which have asymmetric shapes may define the first width W1 of the recess. The second portion 311b of the first housing structure 311 and the second portion 312b of the second housing structure 312 which have symmetric shapes may define the second width W2 of the recess.

As an embodiment, the the first portion 312a and the second portion 312b of the second housing structure 312 may have different distances from the folding axis A. The width of the recess is not limited to the embodiments described above. In various embodiments, the recess may have multiple widths due to the shape of the sensor area 324 or an asymmetric shaped portion of the first housing structure 311 and the second housing structure 312.

As an embodiment, at least a portion of the first housing structure 311 and the second housing structure 312 may include a metal or non-metal material having a selected magnitude of strength for supporting the display 320.

As an embodiment, the sensor area 324 may be configured to have a predetermined area adjacent to one side corner of the second housing 312. However, the disposition, shape, and size of the sensor area 324 is not limited to the embodiment described above. For example, in another embodiment, the sensor area 324 may be provided to a different corner or to a predetermined area between the upper corner and the lower corner of the second housing structure 312.

As an embodiment, components embedded in the electronic device 300 for performing various functions may be exposed to the front side of the electronic device 300 through the sensor area 324 or one or more openings formed through the sensor area 324. In various embodiments, the components may include various sensors. The sensor may include, for example, at least one of an illuminance sensor, a front camera (e.g., a camera module), a receiver, or a proximity sensor.

The first rear cover 380 may be disposed on one side of the folding axis A on the rear surface of the electronic device, and have, for example, a substantially rectangular periphery which may be surrounded by the first housing structure 311. Similarly, the second rear cover 390 may be disposed on the other side of the folding axis A on the rear surface of the electronic device, and may have a periphery surrounded by the second housing structure 312.

In the embodiment shown in the drawing, the first rear cover 380 and the second rear cover 390 may have substantially symmetrical shapes to each other with reference to the folding axis A. However, the first rear cover 380 and the second rear cover 390 do not necessarily have symmetric shapes and in other embodiment, the electronic device 300 may include the first rear cover 380 and the second rear cover 390 having various shapes. In another embodiment, the first rear cover 380 and the first housing structure 311 may be integrally formed and the second rear cover 390 and the second housing structure 312 may be integrally formed.

As an embodiment, the first rear cover 380, the second rear cover 390, the first housing structure 311, and the second housing structure 312 may define a space in which various components (e.g., a printed circuit board or a battery) of the electronic device 300 may be arranged. As an embodiment, one or more components may be arranged on or visually exposed through the rear surface of the electronic device 300. For example, at least a portion of a sub-display 330 may be visually exposed through a first rear area 382 of the first rear cover 380. For another example, one or more components or sensors may be visually exposed through a second rear area 392 of the second rear cover 390. In various embodiments, the sensor may include an illuminance sensor, a proximity sensor, and/or a rear camera.

For example, the hinge cover 313 may be disposed between the first housing structure 311 and the second housing structure 312 and configured to cover an internal component (e.g., a hinge structure). The hinge cover 313 may cover a portion in which the first housing structure 311 and the second housing structure 312 come in contact with each other due to unfolding and folding of the electronic device 300.

As an embodiment, the hinge cover 313 may be covered or exposed through a portion of the first housing structure 311 and the second housing structure 312 depending on a state (an unfolded state (flat state) or a folded state) of the electronic device 300. As an embodiment, when the electronic device 300 is in the unfolded state, the hinge cover 313 may covered by the first housing structure 311 and the second housing structure 312 so as not to be exposed. As an embodiment, in case that the electronic device 300 is in the folded state (e.g., a fully folded state), the hinge cover 313 may be exposed to the outside between the first housing structure 311 and the second housing structure 312. As an embodiment, in the intermediate state in which the first housing structure 311 and the second housing structure 312 are folded with a certain angle, the hinge cover 313 may be partially exposed to the outside between the first housing structure 311 and the second housing structure 312. In this case, the exposed area may be smaller than that of the fully folded state. In an embodiment, the hinge cover 313 may include a curved surface.

The display 320 may be disposed in a space defined by the housing (310). For example, the display 320 may be seated in a recess defined by the housing 310 and define most of the front surface of the electronic device 300.

Accordingly, the front surface of the electronic device 300 may include the display 320, and a portion of the first housing structure 311 and a portion of the second housing structure 312 adjacent to the display 320. The rear surface of the electronic device 300 may include the first rear cover 380, a portion of the first housing structure 311 adjacent to the first rear cover 380, the second rear cover 390, and a portion of the second housing structure 312 adjacent to the second rear cover 390.

The display 320 may be referred to as a display having at least a partial area thereof transformable to a flat surface or a curved surface. As an embodiment, the display 320 may include a folding area 323, a first area 321 disposed on one side (e.g., the left side in FIG. 3A) with reference to the folding area 323, and a second area 322 disposed on the other side (e.g., the right side in FIG. 3A).

As an embodiment, the display 320 may include an OLED display of top emission or bottom emission type. The OLED display may include a low temperature color filter (LTCF) layer, a window glass (e.g., an ultra-thin glass (UTG) or a polymer window), and an optical compensation film (e.g., OCF). In this case, the LTCF layer of the OLED display may replace a polarizing film (or polarizing layer).

The division of areas of the display 320 is exemplary and the display 320 may be divided into multiple areas (e.g., more than two) depending on the structure or function thereof. As an embodiment, the area of the display 320 may be divided by the folding axis A or the folding area 323 extending in parallel with the y-axis, and in another embodiment, the area of the display 320 may be divided with reference to another folding area (e.g., a folding area in parallel with the x-axis) or another folding axis (e.g., a folding axis in parallel with the x-axis).

As an embodiment, the first area 321 and the second area 322 may have overall symmetrical shapes around the folding area 323.

Hereinafter, an operation of the first housing structure 311 and the second housing structure 312 and each area of the display 320 according to the state (e.g., the unfolded state (flat state) and the folded state) of the electronic device 300 will be described.

As an embodiment, in case that the electronic device 300 is in the unfolded state (flat state) (e.g., FIG. 3A), the first housing structure 311 and the second housing structure 312 may be arranged to form an angle of about 180 degrees therebetween and face the same direction. The surface of the first area 321 and the surface of the second area 322 of the display 320 may form an angle of about 180 degrees therebetween and face the same direction (e.g., the front direction of electronic device). The folding area 323 may form substantially the same plane with the first area 321 and the second area 322.

As an embodiment, in case that the electronic device 300 is in the folded state (e.g., FIG. 3B), the first housing structure 311 and the second housing structure 312 may be arranged to face each other. A surface of the first area 321 and a surface of the second area 322 of the display 320 may form a narrow angle (e.g., between 0 degrees and about 10 degrees) therebetween and face to each other. At least a portion of the folding area 323 may include a curved surface having a certain curvature.

As an embodiment, in case that the electronic device 300 is in the intermediate state, the first housing structure 311 and the second housing structure 312 may be arranged at a certain angle.

The electronic device according to various embodiments of the disclosure may include electronic devices such as a bar type, a foldable type, a rollable type, a sliding type, or a wearable-type electronic device, a tablet PC, and/or a notebook PC. The electronic device 300 according to various embodiments of the disclosure is not limited to the example described above and may include various other electronic devices.

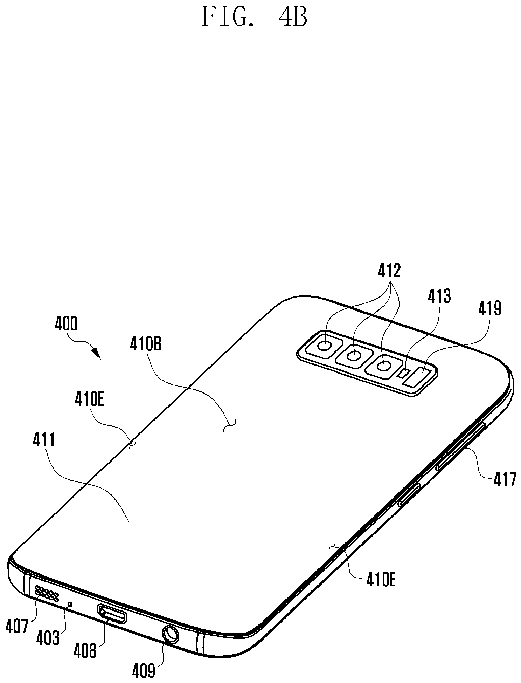

FIG. 4A is a front perspective diagram of an electronic device according to various embodiments of the disclosure. FIG. 4B is a rear perspective diagram of an electronic device according to various embodiments of the disclosure.

Referring to FIG. 4A and FIG. 4B, the electronic device 400 (e.g., the electronic device 101 in FIG. 1) according to various embodiments of the disclosure may include a first surface (or front surface) 410A, a second surface (or rear surface) 410B, and a housing 410. A display 401 (e.g., the display module 160 in FIG. 1) may be disposed in a space defined by the housing 410. The housing 410 may include a lateral surface 410C configured to surround the space between the first surface 410A and the second surface 410B. In another embodiment, the housing 410 may refer to a structure for configuring a portion of the first surface 410A, the second surface 410B, and the lateral surface 110C.

According to an embodiment, at least a portion of the first surface 410A may include a substantially transparent front plate 402 (e.g., a glass plate including various coating layers, or a polymer plate).

According to an embodiment, the second surface 410B may be formed of the substantially opaque rear plate 411. The rear plate 411 may include, for example, coated or colored glass, ceramic, polymers, metals (e.g., aluminum, stainless steel (STS), or magnesium), or a combination of at least two thereof. However, without limitation thereto, the rear plate 411 may be made of transparent glass.

According to an embodiment, the lateral surface 410C may be coupled to the front plate 402 and the rear plate 411 and defined by a lateral bezel structure 418 (or "lateral member") including a metal and/or polymer. In an embodiment, the rear plate 411 and the lateral bezel structure 418 may be integrally formed and include the same material (e.g., a metal material such as aluminum).

In an embodiment, the front plate 402 may include two first areas 410D seamlessly extending from the first surface 410A to be bent toward the rear plate 411. The two first areas 410D may be disposed at both ends of a long edge of the front plate 402.

In an embodiment, the rear plate 411 may include two second areas 410E seamlessly extending from the second surface 410B to be bent toward the front plate 402.

In some embodiments, the front plate 402 (or the rear plate 411) may include only one of the first areas 410D (or the second areas 410E). In some embodiments, a portion of the first areas 410D or the second areas 410E may be not included. In some embodiments, when viewed from a lateral side of the electronic device 400, the lateral bezel structure 418 may have a first thickness (or width) at a lateral surface in which the first areas 410D and the second areas 410E are not included, and may have a second thickness thinner than the first thickness at a lateral surface in which the first areas 410D and the second areas 410E are included.

According to an embodiment, the electronic device 400 may include at least one of a display 401 (e.g., the display module 160 in FIG. 1), an audio input device 403 (e.g., the input module 150 in FIG. 1), an audio output device 407 or 414 (e.g., the audio output module 155 in FIG. 1), a sensor module 404 or 419 (e.g., the sensor module 176 in FIG. 1), a camera module 405 or 412 (e.g., the camera module 180 in FIG. 1), a flash 413, a key input device 417, an indicator (not shown), and connectors 408 and 409. In an embodiment, the electronic device 400 may omit one of components (e.g., the key input device 417) or may additionally include another component.

According to an embodiment, the display 401 (e.g., the display module 160 in FIG. 1) may be visually exposed to outside through, for example, an upper portion of the front plate 402. In some embodiments, at least a portion of the display 401 may be seen through the front plate 402 configuring the first surface 410A and the first area 410D of the lateral surface 410C. The display 401 may be combined to or disposed adjacent to a touch sensing circuit, a pressure sensor for measuring a strength (pressure) of a touch, and/or a digitizer for detecting a magnetic field-type stylus pen.

In an embodiment, a rear surface of a screen display area of the display 401 may include at least one of a sensor module 404, a camera module 405 (e.g., an image sensor), an audio module 414, and a fingerprint sensor.

According to an embodiment, the display 401 may be combined to or disposed adjacent to a touch sensing circuit, a pressure sensor for measuring a strength (pressure) of a touch, and/or a digitizer for detecting a magnetic field-type stylus pen.

In an embodiment, at least a portion of the sensor module 404 or 419 and/or at least a portion of the key input device 417 may be disposed on the first areas 410D and/or the second areas 410E.

According to an embodiment, the audio input device 403 may include a microphone. In some embodiments, the input device 403 may include multiple microphones arranged so as to detect a direction of a sound. The audio output device 407 or 414 may include an outer speaker hole 407 and a receiver (e.g., the audio module 414) used for calling. In an embodiment, the audio input device 403 (e.g., a microphone), the audio output device 407 or 414, and the connectors 408 and 409 may be arranged in an internal space of the electronic device 400 and exposed to the outside environment through at least one hole formed through the housing 410. In an embodiment, the hole formed on the housing 410 may be used in common for the audio input device 403 (e.g., the microphone) and the audio output device 407 or 414. In an embodiment, the audio output device 407 or 414 may include a speaker (e.g., a piezo speaker) operating without a hole formed on the housing 410.

In an embodiment, the sensor module 404 or 419 (e.g., the sensor module 176 in FIG. 1) may generate an electrical signal or data corresponding to an internal operation state or an external environment state of the electronic device 400. The sensor module 404 or 419 may include a first sensor module 404 (e.g., a proximity sensor) disposed on the first surface 410A of the housing 410 and/or a second sensor module 419 (e.g., a HRM sensor) and/or a third sensor module (not shown) (e.g., a fingerprint sensor) disposed on the second surface 410B of the housing 410. For example, the fingerprint sensor may be disposed on the first surface 410A (e.g., the display 401) and/or on the second surface 410B of the housing 410. The electronic device 400 may further include at least one sensor module not shown in the drawings, for example, a gesture sensor, a gyro sensor, an air pressure sensor, a magnetic sensor, an acceleration sensor, a grip sensor, a color sensor, an infrared (IR) sensor, a biometric sensor, a temperature sensor, humidity sensor, or an illuminance sensor.

According to an embodiment, the camera module 405 or 412 may include the first camera module 405 disposed on the first surface 410A of the electronic device 400, and the second camera module 412 disposed on the second surface 410B. The flash 413 may be disposed around the camera module 405 or 412. The camera modules 405 and 412 may include one or more of lenses, an image sensor, and/or an image signal processor. The flash 413 may include, for example, a light-emitting diode or a xenon lamp.

In an embodiment, the first camera module 405 may correspond to an under-display camera (UDC) and may be disposed on a lower portion of a display panel of the display 401. In some embodiments, two or more lenses (wide-angle and telephoto lens) and image sensors may be arranged on one surface of the electronic device 400. In some embodiments, the plurality of first camera modules 405 may be arranged on the first surface (e.g., a surface on which a screen is displayed) of the electronic device 400 in an under-display camera (UDC) scheme.

In an embodiment, the key input device 417 may be disposed on the lateral surface 410C of the housing 410. According to another embodiment, the electronic device 400 may not include a portion or entirety of the key input device 417 described above, and the excluded key input device 417 may be implemented as various forms such as a soft key on the display 401. In an embodiment, the key input device 417 may be implemented by using a pressure sensor included in the display 401.

According to an embodiment, the connectors 408 and 409 may include a first connector hole 408 capable of receiving a connector (e.g., a USB connector) for transmitting or receiving power and/or data to or from an external electronic device, and/or a second connector hole 409 (or an earphone jack) capable of receiving a connector for transmitting or receiving an audio signal to or from an external electronic device. The first connector hole 408 may include a universal serial bus (USB) type A or USB type C port. In case that the first connector hole 408 supports the USB type C, the electronic device 400 (e.g., the electronic device 101 in FIG. 1) may supporting USB power delivery (PD) charging.

In an embodiment, a certain camera module 405 of the camera modules 405 and 412 and/or a certain sensor module 404 of the sensor modules 404 and 419 may be disposed to be visually exposed through the display 401. For another example, in case that the camera module 405 is disposed in an under-display camera (UDC) scheme, the camera module 405 may not be visually exposed to the outside.

In an embodiment, the camera module 405 may be disposed to overlap a display area and may display a screen in the display area corresponding to the camera module 405. A certain sensor module 404 may be disposed in the inner space of the electronic device to perform functions thereof without being visually exposed through the front plate 402.

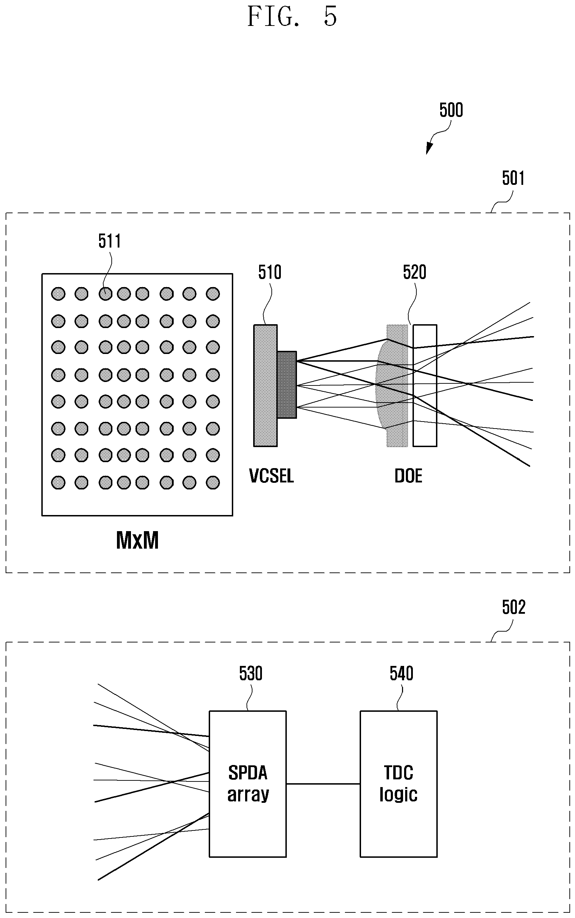

FIG. 5 is a diagram illustrating a Lidar device according to various embodiments of the disclosure.

Referring to FIG. 5, the Lidar device 500 according to various embodiments of the disclosure may include a transmission module 501 and a reception module 502.

According to an embodiment, the transmission module 501 may include a transmission array unit 510 including a plurality of transmission diodes 511 and a diffractive optical unit 520 (e.g., a diffractive optical element (DOE)).

In an embodiment, the transmission array unit 510 may include the plurality of transmission diodes 511 disposed in array form and the plurality of transmission diodes 511 may be individually operate (e.g., turning on/off). For example, the plurality of transmission diodes 511 may be grouped into multiple channels and operate (e.g., turning on/off). The plurality of transmission diodes 511 may be grouped into 4 channels and operate (e.g., turning on/off) for each channel. Here, all of the 4 channels may concurrently operate (e.g., turning on/off) or only one of the 4 channels may operation (e.g., turning on/off).

For example, the plurality of transmission diodes 511 may include a vertical-cavity surface-emitting laser (VCSEL). By way of example, the plurality of transmission diodes 511 may include a laser, a single-sided emitting laser, or a surface light emitting laser.

For example, the diffractive optical unit 520 may divide a laser beam generated by the transmission array unit 510 into multiple beams. For example, the diffractive optical unit 520 may extend or expand a laser beam generated by the transmission array unit 510 in a direction.

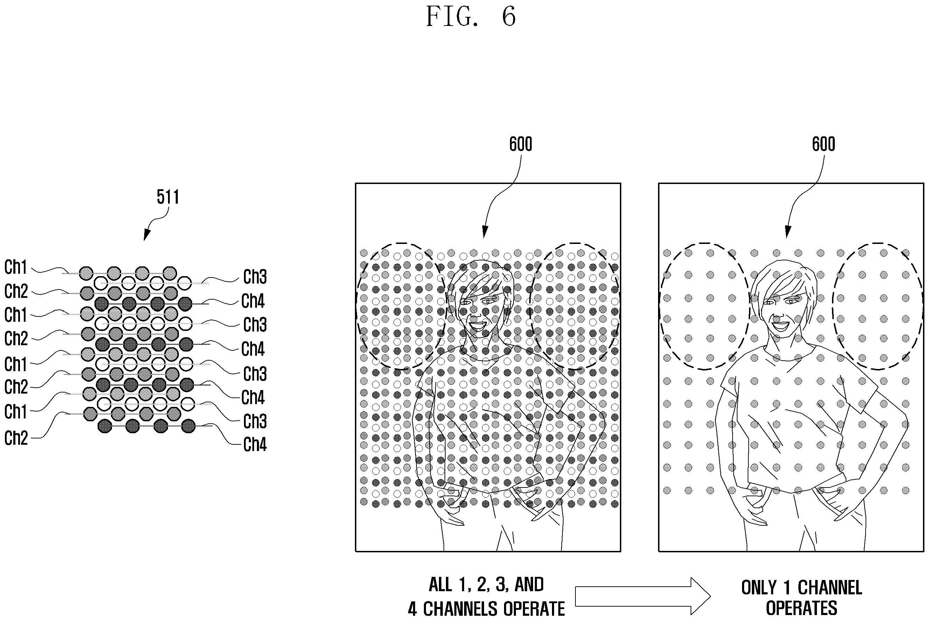

The laser beam emitted from the transmission module 501 may be reflected from an object (e.g., the object 600 in FIG. 6) and then incident to the reception module 502.

According to an embodiment, the reception module 502 may include a reception array unit 530 and a calculation unit 540.

By way of example, the reception array unit 530 may include a plurality of reception diodes (e.g., single photon photodiodes) arranged in an array (e.g., a single photon avalanche diode array (SPDA)) form. For example, the plurality of reception diodes may individually operate (e.g., turning on/off) or may be grouped into multiple channels and operate (e.g., turning on/off). The plurality of reception diodes may include an avalanche photo diode. A photoelectron of the laser beam received by the reception diodes may be amplified through the APD, and a measurement value according to the laser beam may be transmitted to the calculation unit 540.

For example, the calculation unit 540 may include a time-to-digital converter (TDC) logic for measuring an arrival time of each laser beam. The calculation unit 540 may measure the arrival time of each laser beam, based on the measurement value of each laser beam. The calculation unit 540 may transfer a measurement result of the arrival time to a processor (e.g., the processor 120 of FIG. 1).

As an embodiment, the processor (e.g., the processor 120 of FIG. 1) may detect a distance to an object (e.g., the object 600 in FIG. 6), based on the measurement result of the arrival time of the laser beams received from the calculation unit 540.

The processor (e.g., the processor 120 in FIG. 1) may calculate a depth of the object (e.g., the object 600 in FIG. 6) in a frame of an image, based on the distance to the object (e.g., the object 600 in FIG. 6). The processor (e.g., the processor 120 in FIG. 1) may control an operation of the Lidar device 500, based on the distance to the object (e.g., the object 600 in FIG. 6) and a depth value of the object (e.g., the object 600 in FIG. 6).

For example, a separate signal processing processor may be disposed inside the Lidar device 500. The signal processing processor may include a microprocessor. The distance to the object (e.g., the object 600 in FIG. 6) may be detected based on the measurement result of the arrival time of the laser beams acquired by the signal processing processor. The signal processing processor may transfer, to the processor (e.g., the processor 120 in FIG. 1), information for the distance to the object (e.g., the object 600 in FIG. 6). The processor (e.g., the processor 120 in FIG. 1) may calculate a depth of the object (e.g., the object 600 in FIG. 6) in a frame of an image, based on the distance to the object (e.g., the object 600 in FIG. 6). The processor (e.g., the processor 120 in FIG. 1) may control an operation of the Lidar device 500, based on the distance to the object (e.g., the object 600 in FIG. 6) and a depth value of the object (e.g., the object 600 in FIG. 6).

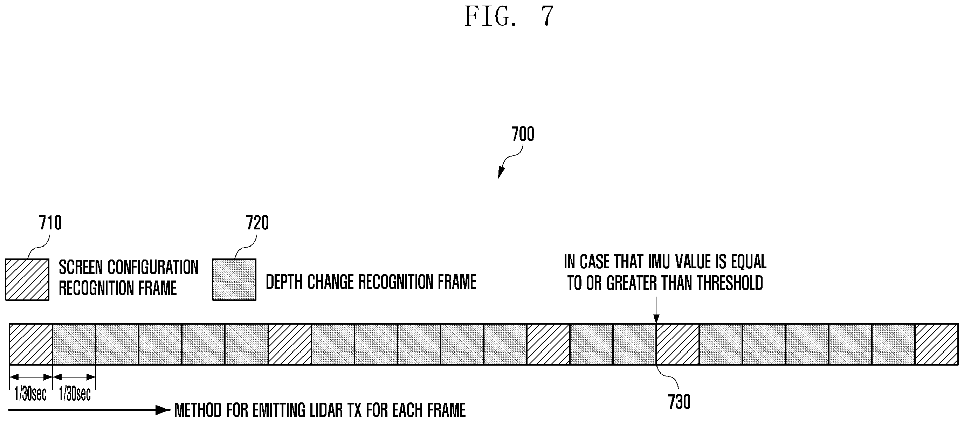

FIG. 6 is a diagram illustrating an operation method of a transmission array unit of a transmission module. FIG. 7 is a diagram illustrating an operation method of a Lidar device for each frame according to various embodiments of the disclosure.

Referring to FIGS. 6 and 7, the processor (e.g., the processor 120 in FIG. 1) may separate frames 700 of a generated image and control an operation of the Lidar device (e.g., the Lidar device 500 in FIG. 5).

In an embodiment, the processor (e.g., the processor 120 in FIG. 1) may divide the frames of the image into a screen configuration recognition frame 710 and a depth change recognition frame 720.

As an embodiment, the processor (e.g., the processor 120 in FIG. 1) may control, in the screen configuration recognition frame 710, the Lidar device (e.g., the Lidar device 500 in FIG. 5) so that all of plurality of transmission diodes (e.g., the plurality of transmission diodes 511 in FIG. 5) included in a transmission array unit (e.g., the transmission array unit 510 in FIG. 5) of the Lidar device (e.g., the Lidar device 500 in FIG. 5) are turned on. By way of example, the Lidar device (e.g., the Lidar device 500 in FIG. 5) may turn on, in the screen configuration recognition frame 710, all of the plurality of transmission diodes (e.g., the plurality of transmission diodes 511 in FIG. 5).

As an embodiment, the processor (e.g., the processor 120 in FIG. 1) may control, in the screen configuration recognition frame 710, the Lidar device (e.g., the Lidar device 500 in FIG. 5) so that all reception diodes of the Lidar device (e.g., the Lidar device 500 in FIG. 5) are turned on. For example, the Lidar device (e.g., the Lidar device 500 in FIG. 5) may turn on, in the screen configuration recognition frame 710, all the reception diodes.

By way of example, the plurality of transmission diodes (e.g., the plurality of transmission diodes 511 in FIG. 5) and pixels of a reception module (e.g., the reception module 502 in FIG. 5) are matched, and the reception module (e.g., the reception module 502 in FIG. 5) may recognize a time at which the plurality of transmission diodes (e.g., the plurality of transmission diodes 511 in FIG. 5) are turned on. The reception module reception module (e.g., the reception module 502 in FIG. 5) may count from the time at which the plurality of transmission diodes (e.g., the plurality of transmission diodes 511 in FIG. 5) are turned on to a time at which light is received. The reception module reception module (e.g., the reception module 502 in FIG. 5) may repeat an operation of counting from the time at which the plurality of transmission diodes (e.g., the plurality of transmission diodes 511 in FIG. 5) are turned on to the time at which light is received and generate a histogram for the time at which light is received.

In an embodiment, the Lidar device (e.g., the Lidar device 500 in FIG. 5) may turn on, in the screen configuration recognition frame 710, the plurality of transmission diodes (e.g., the plurality of transmission diodes 511 in FIG. 5) and plurality of reception diodes to scan the entire area. Here, some of the transmission diodes and some of the reception diodes are turned on to allow the entire area to be scanned.

In an embodiment, the Lidar device (e.g., the Lidar device 500 in FIG. 5) may turn on, in the screen configuration recognition frame 710, all the plurality of transmission diodes (e.g., the plurality of transmission diodes 511 in FIG. 5) and the plurality of reception diodes and generate a histogram based on maximum resolution of the entire screen. The histogram based on the maximum resolution of the entire screen may be provided to a processor (e.g., the processor 120 of FIG. 1). The processor (e.g., the processor 120 of FIG. 1) may extract a peak value from a count histogram of the arrival time of the laser beam for each pixel, based on the histogram based on the maximum resolution of the entire screen. In this case, each of the plurality of reception diodes may be defined as one pixel. The processor (e.g., the processor 120 of FIG. 1) may determine the extracted peak value as a depth value of the object 600.

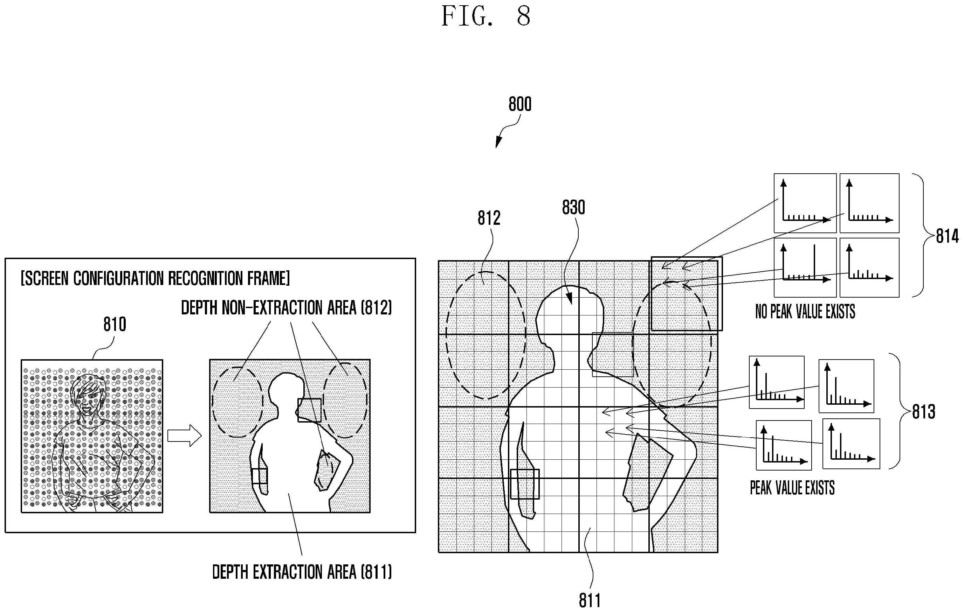

FIG. 8 is a diagram illustrating an operation method of a Lidar device according to a screen configuration recognition frame.

Referring to FIGS. 6 to 8, in an embodiment, a processor (e.g., the processor 120 in FIG. 1) may group, in a screen configuration recognition frame 810, adjacent multiple pixels 813 (e.g., 4x4 pixels) in order to increase the reliability of a depth value of an object 830 (e.g., the object 600 in FIG. 6).

The processor (e.g., the processor 120 of FIG. 1) may determine whether there is similarity between peak values extracted from a histogram (count histogram) of adjacent multiple first pixels 813 (e.g., 4x4 pixels) and adjacent multiple second pixels 814 (e.g., 4x4 pixels). In case that a peak value is extracted from the adjacent multiple first pixels 813 (e.g., 4x4 pixels) and a peak value is not extracted from the adjacent multiple second pixels 814 (e.g., 4x4 pixels), the processor (e.g., the processor 120 in FIG. 1) may determine whether there is similarity between peak values of the adjacent multiple first pixels 813 (e.g., 4x4 pixels). In case that there is similarity between the peak values of the adjacent multiple first pixels 813 (e.g., 4x4 pixels), the processor (e.g., the processor 120 in FIG. 1) may recognize the corresponding portion as a depth sensing area 811. The processor (e.g., the processor 120 of FIG. 1) may determine a peak value in the depth sensing area 811 as a depth value of the object 830, thereby preventing a waste of power during the operation of Lidar device, even though it is determined that the peak values cannot be extracted.

In an embodiment, the processor (e.g., the processor 120 of FIG. 1) may recognize a location in which the object 830 is located in case that the depth value of the object 830 of the peak value in the depth sensing area 811 is equal to or higher than a preconfigured reference value (730).

In an embodiment, the processor (e.g., the processor 120 of FIG. 1) may recognize a background area in case that the depth value of the object 830 of the peak value in the depth sensing area 811 is less than a preconfigured reference value.

According to an embodiment, in case that a distance between the Lidar device (e.g., the Lidar device 500 in FIG. 5) and the object 830 is farther than a distance at which the depth value of the object 830 may be measured, the count histogram may not appear. Peak values may not be extracted unless the count histogram appears. The processor (e.g., the processor 120 of FIG. 1) may recognize the corresponding portion as the depth non-sensing region 812 in case that the count histogram does not appear.

In an embodiment, in case that valid data capable of detecting a phase difference is input to a reception diode, the processor (e.g., the processor 120 of FIG. 1) may determine that depth exists. For example, the processor (e.g., the processor 120 of FIG. 1) may determine depth information by using phase difference information of a laser received by the reception diode in addition to the time information. The processor (e.g., the processor 120 of FIG. 1) may distinguish the depth sensing area 811 and the depth non-sensing area 822, based on the phase difference information. By way of example, the reception diode may receive a laser with a phase difference. For another example, the transmission diode may emit a laser with a phase difference.

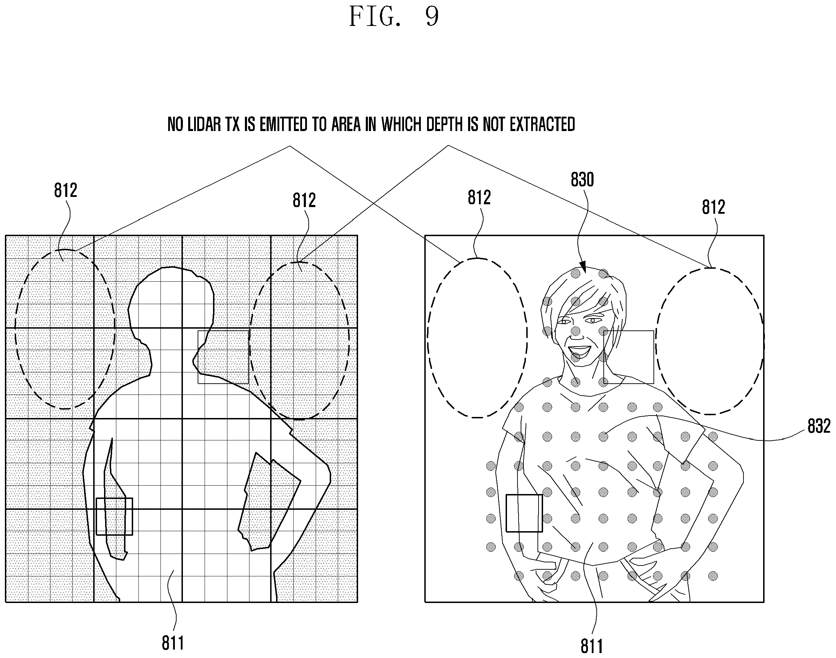

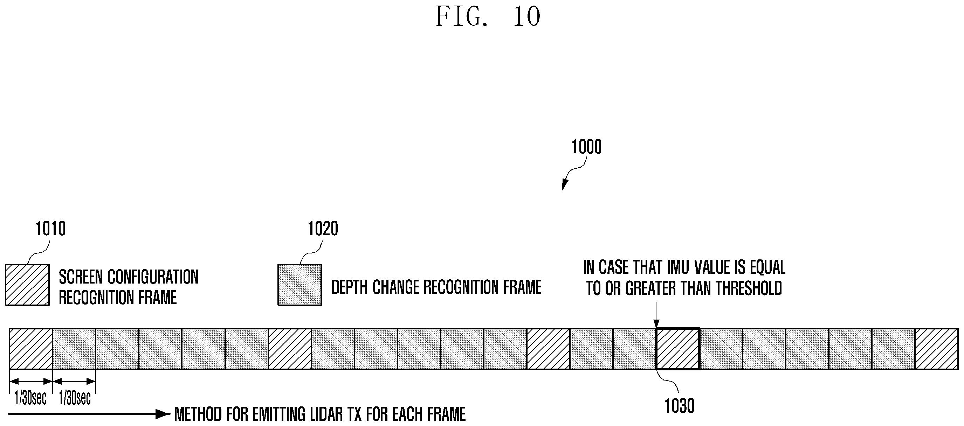

FIG. 9 is a diagram illustrating an operation method of a transmission array unit, based on a depth change recognition frame. FIG. 10 is a diagram illustrating an operation method of a transmission array unit for each frame.

Referring to FIGS. 9 and 10, a processor (e.g., the processor 120 in FIG. 1) may divide frames of an image into a screen configuration recognition frame 1010 and a depth change recognition frame 1020.

According to an embodiment, the processor (e.g., the processor 120 in FIG. 1) may control an operation of a Lidar device (e.g., the Lidar device 500 in FIG. 5) in a depth change recognition frame 1020 depending on whether a depth of the object 830 is recognized.

In an embodiment, the processor (e.g., the processor 120 in FIG. 1) may control an operation of a Lidar device (e.g., the Lidar device 500 in FIG. 5) so that the transmission diodes 832 corresponding to the depth sensing area 811 in which the depth of the object 830 is recognized are turned on in the depth change recognition frame 1020. The processor (e.g., the processor 120 in FIG. 1) may control an operation of a Lidar device (e.g., the Lidar device 500 in FIG. 5) so that the transmission diodes (e.g., the transmission diode 511 in FIG. 5) corresponding to the depth non-sensing area 812 in which the depth of the object 830 is not recognized are turned off in the depth change recognition frame 1020.

In an embodiment, based on the control of the processor (e.g., the processor 120 in FIG. 1), the Lidar device (e.g., the Lidar device 500 in FIG. 5) may turn on the transmission diodes (e.g., the transmission diodes 511 in FIG. 5) corresponding to the depth sensing area 811 in which the depth of the object 830 is recognized in the depth change recognition frame 1020. In an embodiment, based on the control of the processor (e.g., the processor 120 in FIG. 1), the Lidar device (e.g., the Lidar device 500 in FIG. 5) may turn off the transmission diodes (e.g., the transmission diodes 511 in FIG. 5) corresponding to the depth non-sensing area 812 in which the depth of the object 830 is recognized in the depth change recognition frame 1020. As such, among all the transmission diodes (e.g., the transmission diodes 511 in FIG. 5), some transmission diodes 832 corresponding to the depth sensing area 811 in which the depth of the object 830 is recognized may be turned on in the depth change recognition frame 1020, so as to reduce power consumption more than the screen configuration recognition frame 1010.

In an embodiment, the processor (e.g., the processor 120 in FIG. 1) may control an operation of a Lidar device (e.g., the Lidar device 500 in FIG. 5) so that the reception diodes (e.g., the reception array unit 530 in FIG. 5) corresponding to the depth sensing area 811 in which the depth of the object 830 is recognized are turned on in the depth change recognition frame 1020. The processor (e.g., the processor 120 in FIG. 1) may control an operation of a Lidar device (e.g., the Lidar device 500 in FIG. 5) so that the reception diodes corresponding to the depth non-sensing area 812 in which the depth of the object 830 is not recognized are turned off in the depth change recognition frame 1020, thereby reducing power consumption.

In an embodiment, based on the control of the processor (e.g., the processor 120 in FIG. 1), the Lidar device (e.g., the Lidar device 500 in FIG. 5) may turn on the reception diodes corresponding to the depth sensing area 811 in which the depth of the object 830 is recognized in the depth change recognition frame 1020. In an embodiment, based on the control of the processor (e.g., the processor 120 in FIG. 1), the Lidar device (e.g., the Lidar device 500 in FIG. 5) may turn off the reception diodes corresponding to the depth non-sensing area 812 in which the depth of the object 830 is recognized in the depth change recognition frame 1020. As such, among all the reception diodes, some reception diodes corresponding to the depth sensing area 811 in which the depth of the object 830 is recognized may be turned on in the depth change recognition frame 1020, so as to reduce power consumption.

In an embodiment, movement of the object 830 and/or movement of the electronic device may cause a difference of the distance between the object 830 and the Lidar device (e.g., the Lidar device 500 in FIG. 5), and thus the processor (e.g., the processor 120 in FIG. 1) may periodically perform the operation in the screen configuration recognition frame 1010 and the operation in the depth change recognition frame 1020. Based on the operation in the screen configuration recognition frame 1010 and the operation in the depth change recognition frame 1020, the processor (e.g., the processor 120 in FIG. 1) may selectively turn on some transmission diodes 832 and some reception diodes corresponding to the depth sensing area 811 in which the depth of the object 830 is recognized, so as to reduce power consumption.

The electronic device according to various embodiments of the disclosure may include an inertial measurement device (e.g., the sensor module 176 in FIG. 1) (e.g., an inertial measurement unit (IMU))). The inertial measurement device (e.g., the sensor module 176 in FIG. 1) may include a gyro sensor and an acceleration sensor.

As an embodiment, the processor (e.g., the processor 120 in FIG. 1) may receive a posture and acceleration value from the inertial measurement device (e.g., the sensor module 176 in FIG. 1) and control an operation of the Lidar device (e.g., the Lidar device 500 in FIG. 5), based on the posture and acceleration value.

For example, in case that the posture and acceleration value is equal to or greater than a reference value (1030), the processor (e.g., the processor 120 in FIG. 1) may determine that a posture and a location of the electronic device has been changed. In addition, in case that the user wears a human mounted device (HMD), the posture and acceleration value may be changed according to movement of the user. In case that the posture and acceleration value is equal to or greater than a reference value (1030), the processor (e.g., the processor 120 in FIG. 1) may determine that a posture and a location of the electronic device has been changed.

In an embodiment, in case that the posture and location of the electronic device have been changed, the processor (e.g., the processor 120 in FIG. 1) may perform switching from the depth change recognition frame 1020 to the screen configuration recognition frame 1010 and perform an operation. For example, the processor (e.g., the processor 120 in FIG. 1) may perform an operation of recognizing the depth of the object 830 in the screen configuration recognition frame 1010 and according to a depth recognition result of the object 830, may control the Lidar device (e.g., the Lidar device 500 in FIG. 5). Based on the control of the processor (e.g., the processor 120 in FIG. 1), the Lidar device (e.g., the Lidar device 500 in FIG. 5) may selectively turn on some transmission diodes 832 and some reception diodes according to the depth of the object 830.

According to an embodiment, the processor (e.g., the processor 120 in FIG. 1) may transmit the screen configuration recognition frame 1010 and the depth change recognition frame 1020 at designated intervals. For example, referring to FIG. 10, the screen configuration recognition frame 1010 may be transmitted at a rate of 1 and the depth change recognition frame 1020 may be transmitted at a rate of 5. However, it is not limited thereto, and the ratio of the screen configuration recognition frame 1010 and the depth change recognition frame 1020 may be changed.

According to an embodiment, the processor (e.g., the processor 120 in FIG. 1) may change the rate of the screen configuration recognition frame 1010 and the depth change recognition frame 1020 in case that the posture and acceleration value is equal to or greater than a preconfigured reference value (1030). For example, in case that the change in posture and acceleration value is large or the number of times of change is greater than a reference value, the ratio of the screen configuration recognition frame 1010 may be increased.

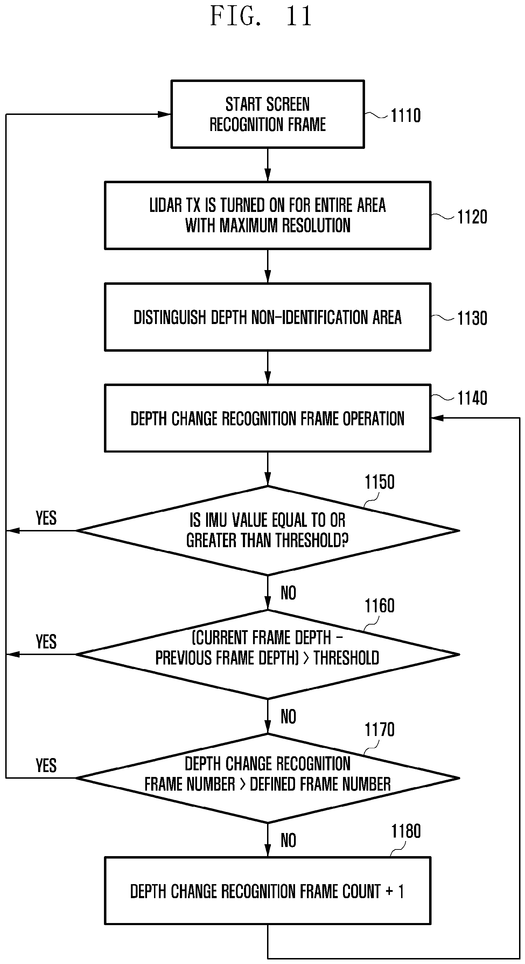

FIG. 11 is a diagram illustrating an operation method of an electronic device according to various embodiments of the disclosure.

Referring to FIGS. 10 and 11, a processor (e.g., the processor 120 in FIG. 1) may divide the entire frames of an image into the screen configuration recognition frame 1010 and the depth change recognition frame 1020.

In operation 1110, the processor (e.g., the processor 120 in FIG. 1) may start an operation of the screen configuration recognition frame 1010.

In operation 1120, the processor (e.g., the processor 120 in FIG. 1) may control an operation of a Lidar device (e.g., the Lidar device 500 in FIG. 5) based on the screen configuration recognition frame 1010. For example, the Lidar device (e.g., the Lidar device 500 in FIG. 5) may turn on, based on the control of the processor (e.g., the processor 120 in FIG. 1), all of transmission diodes (e.g., the transmission diode 511 in FIG. 5) included in a transmission array unit (e.g., the transmission array unit 510 in FIG. 5) to scan an object (e.g., the object 600 in FIG. 6), based on the maximum resolution. A reception array unit (e.g., the reception array unit 530 in FIG. 5) may transfer, to a calculation unit (e.g., the calculation unit 540 in FIG. 5), a measurement value according to a laser beam received by reception diodes. The calculation unit (e.g., the calculation unit 540 in FIG. 5) may measure an arrival time of each laser beam, based on the measurement value of each laser beam. The calculation unit (e.g., the calculation unit 540 in FIG. 5) may transfer a measurement result of the arrival time to a processor (e.g., the processor 120 of FIG. 1). For example, the processor (e.g., the processor 120 of FIG. 1) may detect a distance to the object (e.g., the object 600 in FIG. 6), based on the measurement result of the arrival time of the laser beams received from the calculation unit 540.

In operation 1130, The processor (e.g., the processor 120 in FIG. 1) may calculate a depth value of the object (e.g., the object 600 in FIG. 6) in a frame of an image, based on the distance to the object (e.g., the object 600 in FIG. 6). Depending on the depth value of the object (e.g., the object 600 in FIG. 6), a depth sensing area (e.g., the depth sensing area 811 in FIG. 8) and a depth non-sensing area (e.g., the depth non-sensing area 812 in FIG. 8) may be recognized in a screen configuration recognition frame (e.g., the screen configuration recognition frame 810 in FIG. 8).

In operation 1140, the processor (e.g., the processor 120 in FIG. 1) may control an operation of the Lidar device 500, based on the depth change recognition frame 1020 according to the distance to the object (e.g., the object 830 in FIG. 8) and the depth value of the object (e.g., the object 830 in FIG. 8).

In an embodiment, the processor (e.g., the processor 120 in FIG. 1) may recognize the depth sensing area (e.g., the depth sensing area 811 in FIG. 8) and the depth non-sensing area (e.g., the depth non-sensing area 812 in FIG. 8) and then perform an operation of the depth change recognition frame 1020. The processor (e.g., the processor 120 in FIG. 1) may control an operation of the Lidar device (e.g., the Lidar device 500 in FIG. 5) in the depth change recognition frame 1020 depending on whether a depth of the object 830 is recognized.

In an embodiment, the processor (e.g., the processor 120 in FIG. 1) may control an operation of a Lidar device (e.g., the Lidar device 500 in FIG. 5) so that the transmission diodes 832 corresponding to the depth sensing area (e.g., the depth sensing area 811 in FIG. 9) in which the depth of the object (e.g., the object 830 in FIG. 9) is recognized are turned on in the depth change recognition frame 1020. The processor (e.g., the processor 120 in FIG. 1) may control an operation of the Lidar device (e.g., the Lidar device 500 in FIG. 5) so that the transmission diodes (e.g., the transmission diode 511 in FIG. 5) corresponding to the depth non-sensing area (e.g., the depth non-sensing area 812 in FIG. 9) in which the depth of the object 830 is not recognized are turned off in the depth change recognition frame 1020.

In an embodiment, based on the control of the processor (e.g., the processor 120 in FIG. 1), the Lidar device (e.g., the Lidar device 500 in FIG. 5) may turn on the transmission diodes (e.g., the transmission diodes 832 in FIG. 5) corresponding to the depth sensing area (e.g., the depth sensing area 811 in FIG. 9) in which the depth of the object (e.g., the object 830 in FIG. 9) is recognized in the depth change recognition frame 1020. In an embodiment, based on the control of the processor (e.g., the processor 120 in FIG. 1), the Lidar device (e.g., the Lidar device 500 in FIG. 5) may turn off the transmission diodes (e.g., the transmission diodes 511 in FIG. 5) corresponding to the depth non-sensing area (e.g., the depth non-sensing area 812 in FIG. 9) in which the depth of the object (e.g., the object 830 in FIG. 9) is recognized in the depth change recognition frame 1020. As such, among the entire transmission diodes (e.g., the transmission diode 511 in FIG. 5), the transmission diodes (e.g., the transmission diodes 832 in FIG. 9), corresponding to the depth sensing area (e.g., the depth sensing area 811 in FIG. 9) in which the depth of the object (e.g., the object 830 in FIG. 9) is recognized are turned on in the depth change recognition frame 1020 so as to reduce power consumption.

In an embodiment, the processor (e.g., the processor 120 in FIG. 1) may control an operation of the Lidar device (e.g., the Lidar device 500 in FIG. 5) so that the reception diodes corresponding to the depth sensing area (e.g., the depth sensing area 811 in FIG. 9) in which the depth of the object (e.g., the object 830 in FIG. 9) is recognized are turned on in the depth change recognition frame 1020. The processor (e.g., the processor 120 in FIG. 1) may control an operation of the Lidar device (e.g., the Lidar device 500 in FIG. 5) so that the reception diodes corresponding to the depth non-sensing area (e.g., the depth sensing area 812 in FIG. 9) in which the depth of the object (e.g., the object 830 in FIG. 9) is not recognized are turned off in the depth change recognition frame 1020. As such, among all the reception diodes, some reception diodes corresponding to the depth sensing area (e.g., the depth sensing area 811 in FIG. 9) in which the depth of the object (e.g., the object 830 in FIG. 9) is recognized may be turned on in the depth change recognition frame 1020, so as to reduce power consumption.

As an embodiment, the processor (e.g., the processor 120 in FIG. 1) may receive a posture and acceleration value from the inertial measurement device (e.g., the sensor module 176 in FIG. 1) and control an operation of the Lidar device (e.g., the Lidar device 500 in FIG. 5), based on the posture and acceleration value.

In operation 1150, the processor (e.g., the processor 120 in FIG. 1) may determine whether the posture and acceleration value is equal to or greater than a reference value.

As a result of the determination in operation 1150, in case that the posture and acceleration value is equal to or greater than a reference value, the processor (e.g., the processor 120 in FIG. 1) may perform switching from the operation of the depth change recognition frame 1020 to the operation of the screen configuration recognition frame 1010 so as to perform an operation from operation 1110 again.

As a result of the determination in operation 1150, in case that the posture and acceleration value is not equal to or greater than a reference value, the processor (e.g., the processor 120 in FIG. 1) may compare a result value acquired by subtracting a second depth value from a first depth value of a current frame with a preconfigured reference value. By performing operation 1150, movement of the user may be sensed.

In operation 1160, the processor (e.g., the processor 120 in FIG. 1) may determine whether the result value exceeds the preconfigured reference value. By performing operation 1160, movement of the object (e.g., a subject) may be sensed.

As a result of the determination in operation 1160, in case that the result value exceeds the preconfigured reference value, the processor (e.g., the processor 120 in FIG. 1) may perform an operation from operation 1110 again.

As a result of the determination in operation 1160, in case that the result value does not exceed the preconfigured reference value, the processor (e.g., the processor 120 in FIG. 1) may compare the number of depth change recognition frames 1020 and a preconfigured number of frames.

In operation 1170, the processor (e.g., the processor 120 in FIG. 1) may determine whether the number of depth change recognition frames 1020 exceeds the preconfigured number of frames.

As a result of the determination in operation 1170, in case that the number of depth change recognition frames 1020 exceeds the preconfigured number of frames, the processor (e.g., the processor 120 in FIG. 1) may perform an operation from operation 1110 again. For example, referring to FIG. 10, the preconfigured number of frames may be 5. However, without limitation thereto, the preconfigured number of frames may be changed.

As a result of the determination in operation 1170, in case that the number of depth change recognition frames 1020 does not exceed the preconfigured number of frames, in operation 1180, the processor (e.g., the processor 120 in FIG. 1) may increase a count value of the depth change recognition frames 1020 by 1 and perform an operation from operation 1140 again.

At least a portion of the operations illustrated in FIG. 11 may be omitted. Before or after the at least a portion of the operations illustrated in FIG. 11 may be added and/or inserted at least a portion of the operations described herein with reference to other drawings. In an embodiment, the operations illustrated in FIG. 11 may be performed by the processor (e.g., the processor 120 in FIG. 1) or may be performed by a signal processing processor (e.g., a microprocessor) separately disposed on the Lidar device (e.g., the Lidar device 500 in FIG. 5). In an embodiment, the operations illustrated in FIG. 11 may be distributed and performed by the processor (e.g., the processor 120 in FIG. 1) or the signal processing processor (e.g., a microprocessor) separately disposed on the Lidar device (e.g., the Lidar device 500 in FIG. 5). For example, a memory (e.g., the memory 130 in FIG. 1) may store instructions causing, when executed, the processor (e.g., the processor 120 in FIG. 1) and/or the signal processing processor to perform the operations illustrated in FIG. 11.

An electronic device (e.g., the electronic device 101 in FIG. 1, the electronic device 300 in FIGS. 3A and 3B, and the electronic device 400 in FIGS. 4A and 4B) according to various embodiments of the disclosure may include a Lidar device (e.g., the Lidar device 500 in FIG. 5) including plurality of transmission diodes (e.g., the transmission diode 511 in FIG. 5 and the transmission diodes 832 in FIG. 9) and plurality of reception diodes (e.g., the reception array unit 530 in FIG. 5), a processor 120 configured to control an operation of the Lidar device 500, and a memory (e.g., the memory 130 in FIG. 1) operatively connected to the processor (e.g., the processor 120 in FIG. 1). The memory 130 may store instructions causing, when executed, the processor 120 to control, in a first frame, at least some of the plurality of transmission diodes 511 and 832 and at least some of the plurality of reception diodes (e.g., the reception array unit 530 in FIG. 5) to be turned on so as to scan an entire area and detect a first area (e.g., the sensing area 811 in FIGS. 8 and 9), in which a depth value of an object is sensed, and a second area (e.g., the non-sensing area 812 in FIGS. 8 and 9), in which a depth value of the object is not sensed. The memory may store instructions causing, when executed, the processor to control, among the plurality of transmission diodes 511 and 832, first transmission diodes 511 and 832 corresponding to the first area 811 to be turned on and second transmission diodes 511 and 832 corresponding to the second area 812 to be turned off.

According to an embodiment, the processor 120 may control the Lidar device 500 to cause the plurality of transmission diodes 511 and 832 to be individually turned on or off.

According to an embodiment, the processor 120 may control, in the second frame, among the plurality of reception diodes (e.g., the reception array unit 530 in FIG. 5), first reception diodes (e.g., the reception array unit 530 in FIG. 5) corresponding to the first area 811 to be turned on and second reception diodes (e.g., the reception array unit 530 in FIG. 5) corresponding to the second area 812 to be turned off.

According to an embodiment, the processor 120 may control the Lidar device 500 to cause the plurality of reception diodes (e.g., the reception array unit 530 in FIG. 5) to be individually turned on or off.

According to an embodiment, the Lidar device 500 may include a calculation unit (e.g., the calculation unit 540 in FIG. 5). The plurality of reception diodes (e.g., the reception array unit 530 in FIG. 5) may transfer, to the calculation unit 540, a measurement value according to laser beams reflected by the object and received. The calculation unit 540 may measure an arrival time of the laser beams and transfer a measurement value of the arrival time to the processor 120. The processor 120 may calculate a depth value of the object, based on the measurement value of the arrival time and control an operation of the Lidar device 500, based on the depth value of the object.

According to an embodiment, the Lidar device 500 may generate a histogram for all of the reception diodes (e.g., the reception array unit 530 in FIG. 5) in the first frame. The processor 120 may extract a peak value for each of the plurality of reception diodes (e.g., the reception array unit 530 in FIG. 5) from the histogram and determine the extracted peak value as a depth value of the object.

According to an embodiment, the processor 120 may group two or more adjacent reception diodes (e.g., the reception array unit 530 in FIG. 5) among the plurality of reception diodes (e.g., the reception array unit 530 in FIG. 5) and determine a peak value extracted from a histogram of the grouped reception diodes (e.g., the reception array unit 530 in FIG. 5) as a depth value of the object.

According to an embodiment, the processor 120 may determine, as the second area 812, an area corresponding to reception diodes (e.g., the reception array unit 530 in FIG. 5) of which a peak value is not determined among the reception diodes (e.g., the reception array unit 530 in FIG. 5).

According to an embodiment, the electronic device 101, 300, or 400 may further include an inertial measurement device. The processor 120 may determine, based on the posture and acceleration value measured by the inertial measurement device, a change in posture and location of the electronic device 101, 300, or 400. In case that the posture and location of the electronic device 101, 300, or 400 is changed, the processor 120 may perform switching from the second frame to the first frame and re-detect the first area 811 and the second area 812 to sense the depth value of the object.

According to an embodiment, the processor 120 may periodically perform the switching of the second frame and the first frame.

An operation method of an electronic device 101, 300, or 400 according to various embodiments of the disclosure may sense a depth value of an object with a radar device including plurality of transmission diodes 511 and 832 and plurality of reception diodes (e.g., the reception array unit 530 in FIG. 5) and control the plurality of transmission diodes 511 and 832 and the plurality of reception diodes (e.g., the reception array unit 530 in FIG. 5) to be turned on or off according to the sensed depth value of the object. In the first frame, at least some of the plurality of transmission diodes 511 and 832 and at least some of the plurality of reception diodes (e.g., the reception array unit 530 in FIG. 5) may be controlled to be turned on so as to scan an entire area and a first area 811 in which a depth value of an object is sensed, and a second area 812 in which a depth value of the object is not sensed may be detected. In the second frame, among the plurality of transmission diodes 511 and 832, first transmission diodes 511 and 832 corresponding to the first area 811 may be controlled to be turned on and second transmission diodes 511 and 832 corresponding to the second area 812 may be controlled to be turned off.

According to an embodiment, the plurality of transmission diodes 511 and 832 may be controlled to be individually turned on or off.

According to an embodiment, in the second frame, among the plurality of reception diodes (e.g., the reception array unit 530 in FIG. 5), first reception diodes (e.g., the reception array unit 530 in FIG. 5) corresponding to the first area 811 may be controlled to be turned on and second reception diodes (e.g., the reception array unit 530 in FIG. 5) corresponding to the second area 812 may be controlled to be turned off.

According to an embodiment, the plurality of reception diodes (e.g., the reception array unit 530 in FIG. 5) may be controlled to be individually turned on or off.

According to an embodiment, the plurality of reception diodes (e.g., the reception array unit 530 in FIG. 5) may transfer, to the calculation unit 540 of the Lidar device 500, a measurement value according to laser beams reflected by the object and received. The calculation unit 540 may measure an arrival time of the laser beams and transfer a measurement value of the arrival time to the processor 120. The processor 120 may calculate a depth value of the object, based on the measurement value of the arrival time. An operation of the Lidar device 500 may be controlled based on the depth value of the object.

According to an embodiment, in the first frame, a histogram for all of the reception diodes (e.g., the reception array unit 530 in FIG. 5) may be generated. A peak value for each of the plurality of reception diodes (e.g., the reception array unit 530 in FIG. 5) may be extracted from the histogram. The extracted peak value may be determined as the depth value of the object.

According to an embodiment, one or more adjacent reception diodes (e.g., the reception array unit 530 in FIG. 5) among the plurality of reception diodes (e.g., the reception array unit 530 in FIG. 5) may be grouped and a peak value extracted from a histogram of the grouped reception diodes (e.g., the reception array unit 530 in FIG. 5) may be determined as the depth value of the object.

According to an embodiment, an area corresponding to reception diodes (e.g., the reception array unit 530 in FIG. 5), among the reception diodes (e.g., the reception array unit 530 in FIG. 5), of which a histogram is not generated may be determined as the second area 812.

According to an embodiment, the electronic device 101, 300, or 400 may measure a posture and acceleration and generate a posture and acceleration value. Based on the posture and acceleration value, a change in posture and location of the electronic device 101, 300, or 400 may be determined. In case that the posture and location of the electronic device 101, 300, or 400 is changed, switching from the second frame to the first frame may be performed and the first area 811 and the second area 812 may be re-detected to sense the depth value of the object.

According to an embodiment, the first transmission diodes 511 and 832 and the first reception diodes (e.g., the reception array unit 530 in FIG. 5) corresponding to the first area 811 may be caused to be turned on. The second transmission diodes 511 and 832 and the second reception diodes corresponding to the second area 812 may be controlled to be turned off. The switching from the second frame to the first frame may periodically performed.

The disclosure has been shown and described with reference to various embodiments thereof, but those skilled in the art will appreciate that various modifications and changes may be made to the forms and details of the disclosure without departing from the spirit and scope of the disclosure. The scope of the disclosure is defined by the appended claims and equivalents thereof.

## Claims

1. An electronic device comprising:
a light detection and ranging, Lidar, device comprising a plurality of transmission diodes and a plurality of reception diodes;
a processor configured to control an operation of the Lidar device; and
a memory operatively connected to the processor,
wherein the memory stores instructions that, when executed, cause the processor to:
control, in a first frame, at least some of the plurality transmission diodes and at least some of the plurality reception diodes to be turned on so as to scan an entire area and detect a first area in which a depth value of an object is sensed and a second area in which the depth value of the object is not sensed; and
control, in a second frame, among the plurality of transmission diodes, first transmission diodes corresponding to the first area to be turned on and second transmission diodes corresponding to the second area to be turned off.

2. The electronic device of claim 1, wherein the processor is configured to control the Lidar device so that the plurality of transmission diodes are individually turned on or off.

3. The electronic device of claim 1, wherein in the second frame, among the plurality of reception diodes, first reception diodes corresponding to the first area, are controlled to be turned on and second reception diodes corresponding to the second area, are controlled to be turned off.

4. The electronic device of claim 3, wherein the processor is configured to control the Lidar device so that the plurality of reception diodes to be individually turned on or off.

5. The electronic device of claim 3, wherein the Lidar device comprises a calculation unit,
wherein the plurality of reception diodes are configured to transfer, to the calculation unit, a measurement value based on laser beams reflected and received by the object,
wherein the calculation unit is configured to measure an arrival time of the laser beams and transfer a measurement value of the arrival time to the processor, and
wherein the processor is configured to calculate a depth value of the object, based on the measurement value of the arrival time, and control an operation of the Lidar device, based on the calculated depth value of the object.

6. The electronic device of claim 3, wherein the Lidar device is configured to extract a histogram for all of the reception diodes in the first frame, and
wherein the processor is configured to extract a peak value for each of the plurality of reception diodes from the histogram and determine the extracted peak value as a depth value of the object.

7. The electronic device of claim 6, wherein the processor is configured to group two or more adjacent reception diodes among the plurality of reception diodes and determine a peak value extracted from a histogram of the grouped reception diodes as the depth value of the obj ect.

8. The electronic device of claim 6, wherein the processor is configured to determine, as the second area, an area corresponding to reception diodes of which a peak value is not determined among the plurality of reception diodes.

9. The electronic device of claim 3, further comprising an inertial measurement device,
wherein the processor is configured to determine, based on a posture and acceleration value measured by the inertial measurement device, a change in posture and location of the electronic device, and in case that the posture and location of the electronic device is changed, perform switching from the second frame to the first frame and re-detect the first area and the second area to sense a depth value of the object.

10. The electronic device of claim 3, wherein the processor is configured to periodically perform the switching of the second frame and the first frame.

11. An operation method of an electronic device, the method comprising:
sensing a depth value of an object with a radar device comprising a plurality of transmission diodes and a plurality of reception diodes and controlling the plurality of transmission diodes and the plurality of reception diodes to be turned on or off according to the sensed depth value of the object;
controlling, in a first frame, at least some of the plurality of transmission diodes and at least some of the plurality of reception diodes to be turned on so as to scan an entire area and detecting a first area in which a depth value of the object is sensed and a second area in which the depth value of the object is not sensed; and
controlling, in a second frame, among the plurality of transmission diodes, first transmission diodes corresponding to the first area to be turned on and second transmission diodes corresponding to the second area to be turned off.

12. The method of claim 11, wherein the plurality of transmission diodes are controlled to be individually turned on or off.

13. The method of claim 11, wherein in the second frame, among the plurality of reception diodes, first reception diodes corresponding to the first area are controlled to be turned on and second reception diodes corresponding to the second area are controlled to be turned off.

14. The method of claim 13, wherein the plurality of reception diodes are controlled to be individually turned on or off.

15. The method of claim 13, wherein the plurality of reception diodes transfer, to the calculation unit of the Lidar device, a measurement value according to laser beams reflected by the object and received,
wherein the calculation unit measures an arrival time of the laser beams and transfers a measurement value of the arrival time to the processor, and
wherein the processor calculates a depth value of the object, based on the measurement value of the arrival time, and controls an operation of the Lidar device, based on the calculated depth value of the object.
